# EUROPÄISCHE PATENTANMELDUNG

(11) **EP 0 659 803 A2**
(43) Veröffentlichungstag der Anmeldung: **28.06.1995**
(21) Anmeldenummer: 94119561.2
(22) Anmeldetag: 10.12.1994
(51) Int. Cl.: C08G 77/388, C08G 77/26

(54) **Verfahren zur Herstellung von Organopolysiloxanen mit über Kohlenstoff an Silicium gebundenen sekundären Aminoalkylgruppen**

(30) Priorität: 23.12.1993 DE 4344082
(71) Anmelder: Th. Goldschmidt AG, D-45127 Essen (DE)
(72) Erfinder: Hahn, Günter, Dr., D-45475 Mülheim (DE); Klein, Klaus-Dieter, Dr., D-45468 Mülheim (DE); Schaefer, Dietmar, Dr., D-45529 Hattingen (DE)

(57) **Zusammenfassung**

Verfahren zur Herstellung von Organopolysiloxanen, welche die Gruppierung 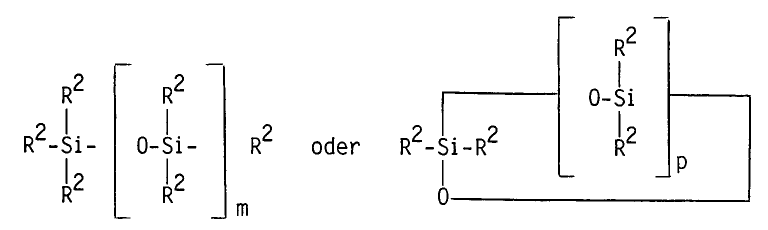
aufweisen, wobei R¹ ein Alkylrest mit 1 bis 4 Kohlenstoffatomen ist. Die Produkte werden durch Hydrosilylierung von Verbindungen der Formel 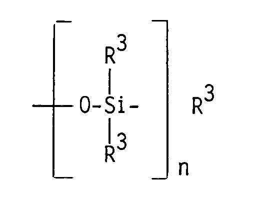
mit Wasserstoffsiloxanen erhalten, wobei die Addition ausschließlich in Form einer γ-Addition stattfindet.

## Beschreibung

Die Erfindung betrifft ein Verfahren zur Herstellung von Organopolysiloxanen mit über Kohlenstoff an Silicium gebundenen sekundären Aminoalkylgruppen durch Hydrosilylierung von sekundären Aminoalkenen mit Wasserstoffsiloxanen in Gegenwart von Platinkatalysatoren und gegebenenfalls anschließende basische Äquilibrierung der organomodifizierten Organopolysiloxane mit cyclischen Siloxanen bis zur Einstellung des gewünschten mittleren Molekulargewichts.

Organopolysiloxane mit sekundären Amingruppen sind aus der US-PS 5 101 056 bekannt. Die Verbindungen werden durch Umsetzung von Polysiloxanolen, deren SiOH-Gruppen endständig sind, mit Silanen der Formel 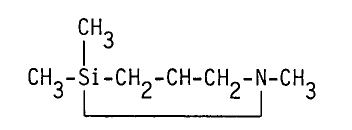
hergestellt. Diese Umsetzung konkurriert jedoch mit der Kondensationsreaktion der Siloxanole und liefert ein Gemisch von Verbindungen unterschiedlicher Funktionalität und Kettenlänge. Überdies ist die Herstellung des Silazans aufwendig.

Aus der US-PS 4 892 918 ist ein Verfahren bekannt, Organopolysiloxane mit sekundären Amingruppen dadurch herzustellen, daß man
(a) ein N-substituiertes N-Alkenylmonoamin, dessen olefinische Doppelbindung mindestens zwei Kohlenstoffatome vom Aminstickstoff entfernt ist,
(b) mit einem Si-H-funktionellen Organopolysiloxan der Formel 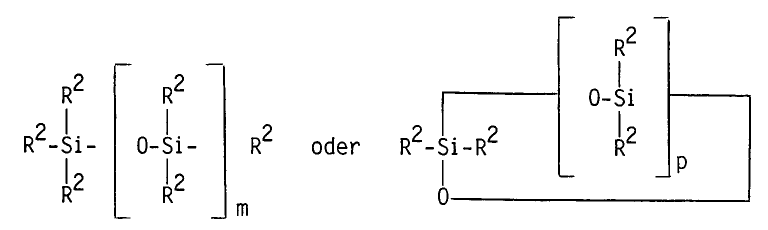 wobei jeder Rest R² ein H-, Alkyl-, Alkoxy-, Cyanoalkyl-, Halogenalkyl-, Acetoxy-, ein gegebenenfalls substituierter Cycloalkyl-, Aryl- oder Aralkylrest sein kann,
   oder mit einem Siloxan der Formel 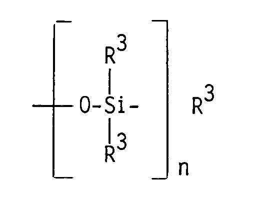 wobei m und n natürliche Zahlen von 1 bis etwa 10 000 sind; p eine natürliche Zahl von 2 bis 20 ist; die Summe von m+n kleiner als etwa 10 000 ist; und wobei R³ ein H-, Alkyl-, Alkoxy-, Cyanoalkyl-, Halogenalkyl-, Acetoxy-, ein gegebenenfalls substituierter Cycloalkyl-, Aryl- oder Aralkylrest sein kann, jedoch wenigstens ein Rest R² oder R³ ein Wasserstoffrest ist,
(c) in Gegenwart eines Hydrosilylierungskatalysators in wirksamer Menge
   umsetzt.

Bei dieser Reaktion erhält man ein Gemisch von Reaktionsprodukten, da die Additionsreaktion in Form der β- und γ-Addition ablaufen kann:

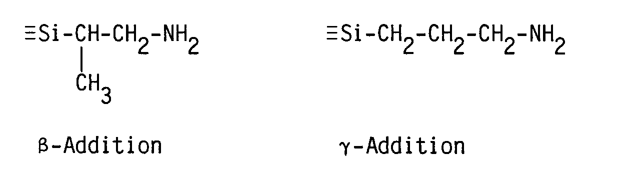

Die Bildung der Produkte entsprechend einer β-Addition ist aber unerwünscht, da die Thermostabilität dieser Produkte gegenüber den Produkten der γ-Addition vermindert ist.

Überraschenderweise wurde nun gefunden, daß man Organopolysiloxane mit über Kohlenstoff an Silicium gebundenen sekundären Aminoalkylgruppen unter praktisch ausschließlicher Bildung der γ-Additionsprodukte erhält, wenn man entsprechend dem erfindungsgemäßen Verfahren bei der Hydrosilylierung als sekundäre Aminoalkene solche der allgemeinen Formel 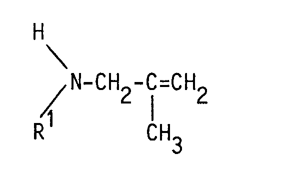
verwendet, wobei R¹ ein Alkylrest mit 1 bis 4 Kohlenstoffatomen ist.

Dies ist auch insofern erstaunlich, da die vinylische Alkylgruppierung eine zusätzliche sterische Behinderung darstellt und auch die elektronische Struktur der Doppelbindung zu Ungunsten der Reaktion verändert. Man mußte somit vielmehr erwarten, daß der Ablauf der Reaktion zumindest erheblich behindert sein würde, unabhängig von der überraschenden Feststellung der ausschließlichen γ-Addition.

Vorzugsweise verwendet man bei dem erfindungsgemäßen Verfahren als Wasserstoffsiloxane Verbindungen der allgemeinen Formel 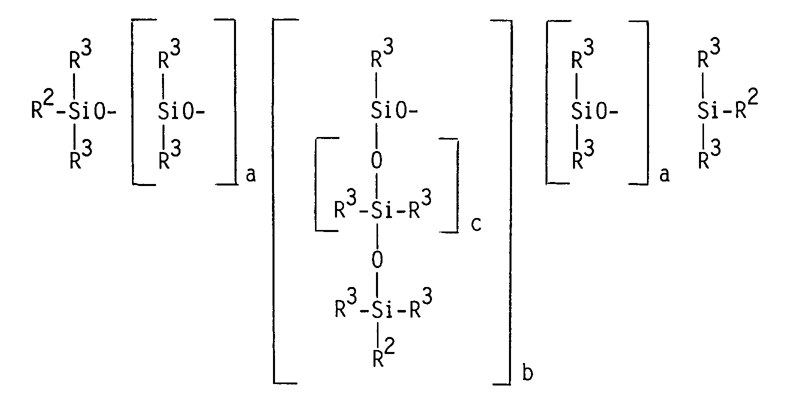
in der
- R³: im durchschnittlichen Molekül Alkylreste mit 1 bis 18 Kohlenstoffatomen oder Arylreste bedeuten, jedoch mindestens 90 % der Reste R³ Methylreste sind,
- R²: die Bedeutung der Reste R³ hat oder Wasserstoffreste sind, wobei im durchschnittlichen Molekül mindestens 2 Reste R² Wasserstoffreste sein müssen,
- a: einen Wert von 0,5 bis 100,
- b: einen Wert von 0 bis 5 und
- c: einen Wert von 0 bis 100 hat.

Besonders bevorzugt sind Wasserstoffpolysiloxane, bei denen R² Wasserstoffreste und R³ Methylreste sind, a einen Wert von 0,5 bis 5, b den Wert 0 hat und c einen Wert von 1 bis 10 hat.

Beispiel eines besonders bevorzugten Wasserstoffpolysiloxans ist eine Verbindung der nachstehenden Formel, in der x zum Beispiel Werte von 5 oder 9 oder 15 annehmen kann: 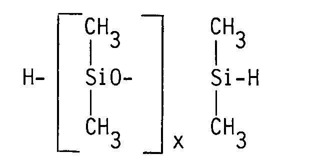
Als cyclische Siloxane werden für die Äquilibrierungsreaktion zur Einstellung des gewünschten Molekulargewichtes (Kettenlänge und damit entsprechende Viskosität des Polysiloxans) vorzugsweise Siloxane der allgemeinen Formel 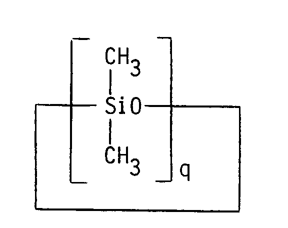
wobei q den Zahlenwert von 4 oder 5 hat, verwendet.

Die Hydrosilylierungsreaktion verläuft in Gegenwart eines Platinkatalysators, wie er für derartige Reaktionen bekannt und zum Beispiel in der US-PS 4 892 918 beschrieben ist. Besonders bevorzugt sind komplexe Katalysatoren, wie Platin-Pyridin-Halogen-Komplexkatalysatoren.

Die Hydrosilylierungsreaktion wird vorzugsweise mit einem gewissen, etwa 15mol%igem Überschuß von Aminoalkenen, bezogen auf eine SiH-Gruppe, vorgenommen. Lösungsmittel müssen nicht eingesetzt werden, stören jedoch nicht, falls sie, in bezug auf die Reaktion, inert sind. Die Reaktionstemperatur liegt im allgemeinen und vorzugsweise bei etwa 140 bis 160°C. Die Reaktionsdauer beträgt 1 bis 8, vorzugsweise 1 bis 3 Stunden.

Beispiele für erfindungsgemäß erhaltene modifizierte Polysiloxane mit sekundären Amingruppen sind 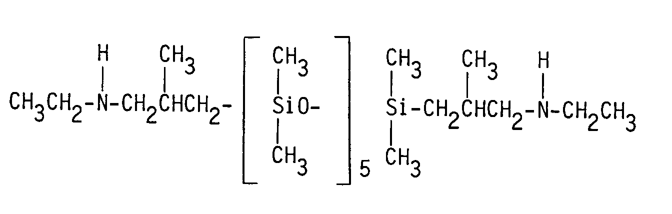 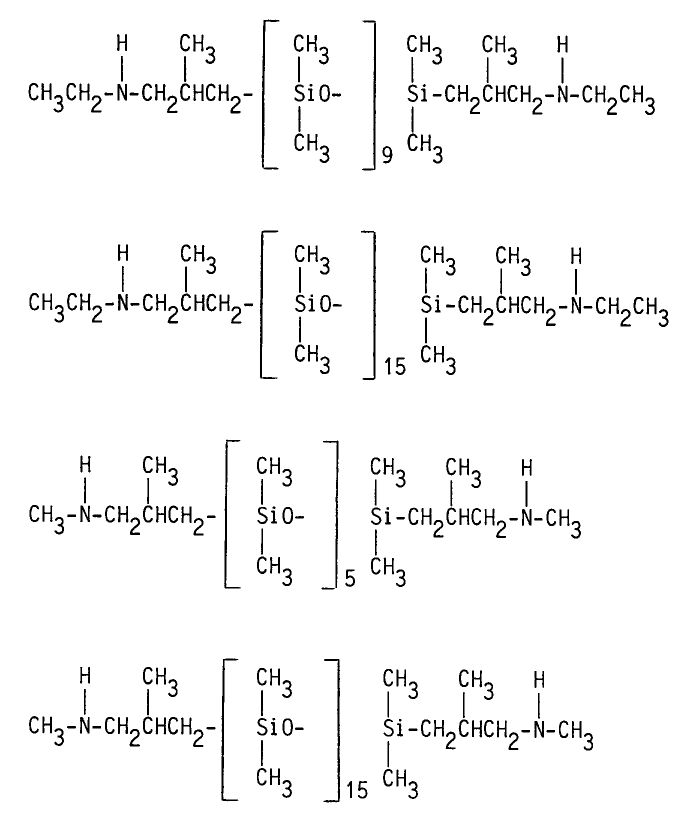
sowie ein verzweigtes Siloxan gemäß Patentanspruch 2, wobei der Index a jeweils einen Wert von 1 hat und der Index b = 2 ist.

Die erfindungsgemäß erhaltenen Siloxane mit endständigen sekundären Aminoalkylgruppen können zur Behandlung von Textilien verwendet werden, um ihnen einen weichen Griff und eine gewisse Antistatik zu vermitteln. Die erfindungsgemäß erhaltenen Verbindungen können aber insbesondere als reaktive Komponenten zur Herstellung polymerer Verbindungen eingesetzt werden:
Eine Verwendungsmöglichkeit besteht darin, sie als Vernetzungskomponente in Epoxidharzen zur Verbesserung der Zähigkeit der Epoxidharze, insbesondere bei tiefen Temperaturen, einzusetzen.

Ein weiterer Verwendungszweck ist ihre Umsetzung mit Siloxanen, welche endständig Epoxidgruppen aufweisen, um Polymere zu erhalten, welche zur Beschichtung von Textilien eingesetzt werden. Diese Beschichtungen verleihen den Textilien einen weichen Griff.

Die Verbindungen können mit Diisocyanaten zu Polyharnstoffen umgesetzt werden. Die Reaktion sekundärer Aminogruppen mit Isocyanaten ist gut beherrschbar und führt zu linearen Polyharnstoffen, die im Gegensatz zur Reaktion mit primären Aminen nicht zur Vergelung neigen. Außerdem sind die Wechselwirkungen zwischen den Harnstoffgruppen durch die Alkylsubstituenten geschwächt, was zu einer leichteren Verarbeitbarkeit der Polyharnstoffe auf dem Extruder oder einer Spritzgießmaschine führt. Polyharnstoffe dieser Art sind ebenfalls zur Beschichtung von Textilien geeignet.

Eine weitere Verwendungsmöglichkeit der erfindungsgemäß erhaltenen Verbindungen besteht in ihrer Abmischung mit Diaminen und der nachfolgenden gemeinsamen Reaktion mit Diisocyanaten. Man erhält thermoplastische Polyurethanharnstoffe, die bei der Herstellung von medizinischen Geräten, z.B. von Schläuchen und Kathetern, verwendet werden können.

Aufgrund ihrer guten Beständigkeit gegen Öl und Benzin können die thermoplastischen Polyurethanharnstoffe auch als Dichtungsmaterialien im Automobilbau eingesetzt werden.

In den folgenden Beispielen wird das erfindungsgemäße Verfahren noch näher erläutert.

### Beispiel 1

### Herstellung eines α,ω-Di[(N-ethyl)amino(2-methyl)propyl](polydimethyl)siloxans

In einem mit einem Rührer, Rückflußkühler, Thermometer und Tropftrichter versehenen 2-l-Vierhalskolben werden 1000 g eines α,ω-Dihydrogen(polydimethyl)siloxans mit einem Wasserstoffgehalt von 0,3022 % (661,8 g/Mol) sowie 20 ppm eines Platinkomplexes (bezogen auf Gesamtansatz und Platingehalt) vorgelegt und bis auf 150°C aufgeheizt. Danach werden vorsichtig 386 g N-Ethylmethallylamin (3,9 Mol; 30 %iger Überschuß) so zugetropft, daß die Innentemperatur 155°C nicht übersteigt. Nach beendeter Zugabe wird die Reaktionsmischung bei 150°C bis zum vollständigen Si-H-Umsatz gerührt, dessen Detektion volumetrisch oder IR-spektroskopisch erfolgen kann. Dabei muß berücksichtigt werden, daß die Reaktionszeit entscheidend von der Qualität des eingesetzten Alkenylamins bestimmt wird.

Das Produkt wird dann bei 100°C im Ölpumpenvakuum vom Aminüberschuß und anderen flüchtigen Produkten befreit und filtriert. Man erhält eine niederviskose, klare und farblose Flüssigkeit.

Stickstoffgehalt gemäß HClO₄-Titration: 3,02 %.

Die NMR-Spektroskopie signalisiert, daß ausschließlich γ-Anlagerung stattgefunden hat:
¹H-NMR:
δ = 0,04 ppm [s, Si-CH₃]; 0,30 bis 0,75 ppm [2H, m, Si-CH₂-];
0,95 ppm [3H, d, CH₃-CH]; 1,11 ppm [3H, t, CH₃-CH₂-];
1,80 ppm [1H, m, CH]; 2,45 ppm [2H, m, CH₂-CH]; 2,62 ppm [2H, q, CH₂-CH₃].
²⁹Si-NMR:
δ = -22 ppm [-(CH₃)₂SiO-, 7,85 Si];
7,2 ppm [Si-CH₂CH(CH₃)CH₂NHCH₂CH₃, 2 Si].

Das im Beispiel 1 hergestellte Produkt kann mit cyclischen Siloxanen unter Molekülvergrößerung äquilibriert werden. Hierzu werden 926,9 g (1 Mol) des erhaltenen Produktes in einem 10-l-Reaktionsgefäß mit 6685 g (90 Mol) Cyclotetra(dimethyl)siloxan und 1,9 g (11 mMol) Tetramethylammoniumhydroxidpentahydrat gemischt und 10 h bei 90°C gerührt, wobei die Viskosität stetig zunimmt.

Anschließend wird die Temperatur auf 160°C erhöht und so binnen 3 h der basische Äquilibrierungskatalysator zerstört. Das Produkt wird nun im Ölpumpenvakuum von flüchtigen Bestandteilen befreit und filtriert.

Man erhält auf diese Weise eine klare und farblose Flüssigkeit (Viskosität nach Brookfield ca. 185 mPa.s), die einen Stickstoffgehalt von 0,35 % aufweist.

Das erhaltene Produkt hat eine Kettenlänge von N ≈ 100.

### Beispiel 2

### Herstellung eines α,ω-Di[(N-Methyl)amino(2-methyl)propyl](polydimethyl)siloxans

In einem 2-l-Vierhalskolben, der mit einem Rührer, Rückflußkühler, Thermometer und Tropftrichter versehen ist, werden 1000 g eines α,ω-Dihydrogen(polydimethyl)siloxans mit einem Wasserstoffgehalt von 0,3022 % (661,8 g/Mol) sowie 20 ppm eines Platinkomplexes (bezogen auf Gesamtansatz und Platingehalt) vorgelegt und bis auf 150°C aufgeheizt. Danach werden vorsichtig 335 g N-Methylmethallylamin (3,9 Mol; 30 %iger Überschuß) so zugetropft, daß die Innentemperatur 155°C nicht übersteigt. Nach beendeter Zugabe wird die Reaktionsmischung bei 150°C bis zum vollständigen Si-H-Umsatz gerührt, dessen Detektion volumetrisch oder IR-spektroskopisch erfolgen kann.

Das Produkt wird dann bei 100°C im Ölpumpenvakuum vom Aminüberschuß und anderen flüchtigen Produkten befreit und filtriert. Man erhält eine niederviskose, klare und farblose Flüssigkeit.

Stickstoffgehalt gemäß HClO₄-Titration: 3,11 %.

Auch hier wird gemäß der NMR-Spektroskopie nur das γ-Anlagerungsprodukt gefunden:
¹H-NMR:
δ = 0,04 ppm [s, Si-CH₃]; 0,30 bis 0,75 ppm [2H, m, Si-CH₂-];
0,95 ppm [3H, d, CH₃-CH]; 1,80 ppm [1H, m, CH]; 2,45 ppm [2H, m, CH₂-CH]; 2,32 ppm [6H, q, N-CH₃].
²⁹Si-NMR:
δ = -22 ppm [-(CH₃)₂SiO-, 7,85 Si];
7,2 ppm [Si-CH₂CH(CH₃)CH₂NHCH₂CH₃, 2 Si].

### Beispiel 3

### Vergleichsbeispiel

### Herstellung eines α,ω-Di[(N,N'-dimethyl)aminopropyl](polydimethyl)siloxans

In einer Apparatur - wie schon in Beispiel 1 und 2, jedoch bei einer Innentemperatur von 125 bis 130°C - werden 1000 g eines α,ω-Dihydrogen(polydimethyl)siloxans mit einem Wasserstoffgehalt von 0,3022 % (661,8 g/Mol) sowie 20 ppm eines Platinkomplexes (bezogen auf Gesamtansatz und Platingehalt) vorgelegt und mit 335 g (3,9 Mol) N,N'-Dimethylallylamin versetzt. Nach Destillation und Filtration wird eine hellgelbe, niedrigviskose Flüssigkeit erhalten.

Stickstoffgehalt gemäß HClO₄-Titration: 3,38 %.

Die Integration sowohl der ¹H- als auch der ²⁹Si-NMR-Spektroskopie signalisiert, daß neben 90 % γ-Anlagerung auch 10 % β-Addition stattgefunden hat:
¹H-NMR:
δ = 0,04 ppm [s, Si-CH₃]; 0,44 ppm [2H, m, Si-CH₂-]; 0,95 ppm [d, CH₃-CH, β-Addition]; 1,44 ppm [2H, m, -CH₂-]; 2,10 ppm [8H, m, (CH₃-)₂N und -CH₂-N].
²⁹Si-NMR:
δ = -22 ppm [-(CH₃)₂SiO-];
7,7 ppm γ-Addition;
8,2 ppm β-Addition.

Durch dieses Beispiel wird deutlich, daß bei Verwendung eines Allylaminderivates im Vergleich zum Methallylderivat keine ausschließliche γ-Anlagerung erhalten wird. Man erhält ein Gemisch von Verbindungen, welches durch 90 % γ-Anlagerung und 10 % β-Anlagerung entstanden ist.

Verwendet man als Aminkomponente Allylamin, verstärkt sich die Tendenz zur Bildung von Produkten nach einer β-Addition noch wesentlich:

### Beispiel 4

### Vergleichsbeispiel

### Herstellung eines α,ω-Di[aminopropyl](polydimethyl)siloxans

In einer Apparatur - wie schon in Beispiel 1 und 2 beschrieben, jedoch bei 125 bis 130°C Innentemperatur - werden 1000 g eines α,ω-Dihydrogen(polydimethyl)siloxans mit einem Wasserstoffgehalt von 0,3022 % (661,8 g/Mol) sowie 20 ppm eines Platinkomplexes (bezogen auf Gesamtansatz und Platingehalt) vorgelegt und mit 222 g (3,9 Mol) Allylamin versetzt. Nach Destillation und Filtration wird auch hier eine hellgelbe, niedrigviskose Flüssigkeit erhalten.

Stickstoffgehalt gemäß HClO₄-Titration: 3,65 %.

Die Integration sowohl der ¹H- als auch der ²⁹Si-NMR-Spektroskopie signalisiert, daß neben Anteilen von Si-N-C-gebundenem Produkt (aufgrund ungeschützter Aminofunktion) der Si-C-gebundene Teil zu 75 % auf eine γ-Anlagerung und zu 25 % auf eine β-Addition zurückzuführen ist:
¹H-NMR:
δ = 0,06 ppm [s, Si-CH₃]; 0,55 ppm [2H, m, Si-CH₂-]; 0,95 ppm [d, CH₃-CH, β-Addition]; 1,45 ppm [2H, m, -CH₂-]; 2,65 ppm [m, -CH₂-N].
²⁹Si-NMR:
δ = -22 ppm [-(CH₃)₂SiO-];
7,80 ppm γ-Addition;
8,30 ppm β-Addition.

## Patentansprüche

1. Verfahren zur Herstellung von Organopolysiloxanen mit über Kohlenstoff an Silicium gebundenen sekundären Aminoalkylgruppen durch Hydrosilylierung von sekundären Aminoalkenen mit Wasserstoffsiloxanen in Gegenwart von Platinkatalysatoren und gegebenenfalls anschließende basische Äquilibrierung der organomodifizierten Organopolysiloxane mit cyclischen Siloxanen bis zur Einstellung des gewünschten mittleren Molekulargewichts, dadurch gekennzeichnet, daß man als sekundäre Aminoalkene solche der allgemeinen Formel 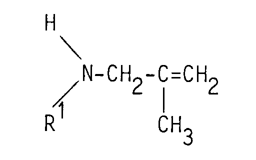 verwendet, wobei R¹ ein Alkylrest mit 1 bis 4 Kohlenstoffatomen ist.

2. Verfahren nach Anspruch 1, dadurch gekennzeichnet, daß man als Wasserstoffsiloxane Verbindungen der allgemeinen Formel 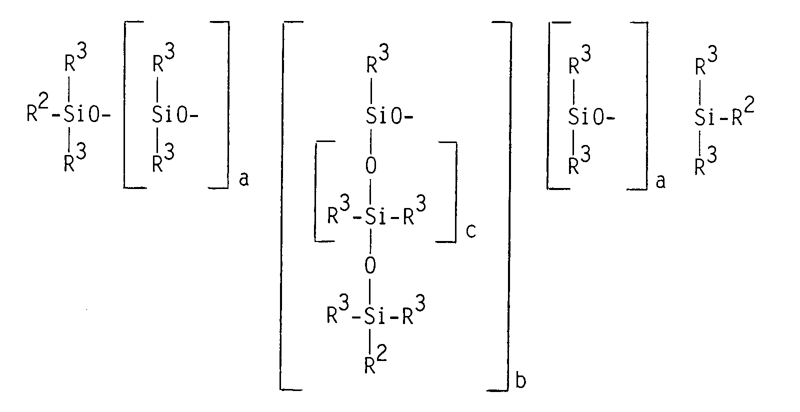 verwendet, wobei
R³ im durchschnittlichen Molekül Alkylreste mit 1 bis 18 Kohlenstoffatomen oder Arylreste bedeutet, jedoch mindestens 90 % der Reste R³ Methylreste sind,
R² die Bedeutung der Reste R³ hat oder Wasserstoffreste sind, wobei im durchschnittlichen Molekül mindestens 2 Reste R² Wasserstoffreste sein müssen,
a einen Wert von 0,5 bis 100,
b einen Wert von 0 bis 5 und
c einen Wert von 0 bis 100 hat.

3. Verfahren nach Anspruch 2, dadurch gekennzeichnet, daß man als Wasserstoffsiloxane Verbindungen verwendet, bei denen
R² Wasserstoffreste und
R³ Methylreste sind,
a einen Wert von 0,5 bis 5,
b einen Wert 0 und
c einen Wert von 1 bis 10 hat.
